# EUROPÄISCHE PATENTSCHRIFT

(11) **EP 2 187 366 B1**
(45) Veröffentlichungstag und Bekanntmachung des Hinweises auf die Patenterteilung: **18.04.2012**
(21) Anmeldenummer: 09175481.2
(22) Anmeldetag: 10.11.2009
(51) Int. Cl.: G06K 7/00, G07G 1/14

(54) **Vorrichtung und Verfahren zum Laden von Zeichensätzen**
Method and device for loading character sets
Dispositif et procédé de chargement de polices

(30) Priorität: 11.11.2008 DE 102008056790
(43) Veröffentlichungstag der Anmeldung: 19.05.2010
(73) Patentinhaber: Wincor Nixdorf International GmbH, 33106 Paderborn (DE)
(72) Erfinder: Oelkers, Hans-Joachim, 12107 Berlin (DE); Trochim, Horst, 12305 Berlin (DE); Mattke, Thomas, 15755 Teupitz (DE); Osinski, Dirk, 14974 Ludwigsfelde (DE)
(74) Vertreter: 2K Patentanwälte Blasberg Kewitz & Reichel

(56) Entgegenhaltungen:
- FR-A1- 2 892 885
- US-A1- 2007 179 851

## Beschreibung

Die Erfindung betrifft ein Verfahren und eine Vorrichtung zur Verwaltung von Zeichensätzen auf Produktscannern.

### Gebiet der Erfindung:

Auf dem Markt gibt es eine Reihe von Kleingeräten, die über eine Netzwerk-Verbindung dauerhaft oder auch nur temporär verfügen, die über ein Display dem Benutzer Informationen anzeigen. Für einen Einsatz in unterschiedlichen Sprachräumen bedarf es der Hinterlegung von unterschiedlichen Zeichensätzen, in denen insbesondere die Sonderzeichensätze Berücksichtigung finden.

Der BEETLE/iCheck G der Anmelderin ist ein solches Kleingerät mit beschränkten Ressourcen, das eine Überprüfung von Preisen online erlaubt. Dieses Gerät hat einen eingebauten Scanner, eine grafische Anzeige (z.B. 256 * 64 Pixel, das heißt mit einer 8 *16 bzw. 16 *16 Zeichen-Matrix) und ein LAN/WLAN Interface zum Server. Um den Preis eines Artikels zu überprüfen, hält der Kunde den Artikel so unter das Gerät, dass der Barcode gelesen wird. Der Barcode wird dann zum Server geschickt, der aus einer Datenbank den Text und den Preis ermittelt. Beides wird zum BEETLE/iCheck G zurückgeschickt und auf der Anzeige dargestellt.

Dieses Gerät hat einer, Flash-Baustein, in den Firmware und die diversen Zeichensätze für die unterschiedlichen Länder geladen werden können. Aus Kostengründen ist der Flash-Baustein aber nicht groß genug, um alle Zeichensätze unterbringen zu können. Sie sind daher von einer externen Datenquelle aus ladbar.

Aus der EP 0601 064 B1 ist ein mobiles System bekannt, das dem Benutzer Preisinformationen und Zusatzinformationen zu Produkten anzeigt. Die offenbarte Erfindung umfasst ein Produktinformationssystem, das einen Kunden mit aktuellen, präzisen Informationen zu einzelnen Produkten in einem Einzelhandelsgeschäft ausstattet und Barcode-Scanner an den Kassen und auf einzelnen, selbständigen, tragbaren und von den Kunden bedienten Produktinformations-Ferneinheiten zur Erfassung der Einkaufe des Kunden verwendet, wobei das Produktinformationssystem folgendes umfasst: eine Vielzahl von selbständigen, tragbaren Produktinformations-Ferneinheiten, von denen jede mit Informationen zu jedem einzelnen Artikel im Einzelhandelsgeschäft von einer Fernquelle aktualisiert werden kann; und jede der Einheiten wird jedem Kunden im Geschäft, der bei seinem Gang durch das Geschäft Zugriff auf die Produktinformationen wünscht, zur Verfügung gestellt; und jede Einheit umfasst: i) eine Barcode-Scanningvorrichtung, die wirksam mit einem Mikrocomputer verbunden und in der Lage ist, die Barcodes auf den einzelnen Produkten zu decodieren, ii) einen Mikrocomputer mit einem DB-Speicher, der in der Lage ist, aktualisierbare Produktinformationen, die zu den einzelnen Barcodes der Produkte, die der Kunde mit Hilfe der Barcode-Scanningvorrichtung erfasst, um Produktinformationen zu erhalten, in Beziehung stehen, zu speichern und wiederaufzufinden, iii) Mittel, mit denen die Produktinformationen dem Kunden angezeigt werden können und die wirksam mit dem Mikrocomputer verbunden sind, iv) Kontrollmittel, die wirksam mit dem Mikrocomputer verbunden sind, um den Kunden mit einer begrenzten Anwenderfunktionen-Kontrolle des Mikrocomputers einschließlich der Behandlung ausgewählter Produktinformationen auszustatten, v) Stromversorgungsmittel für die Speisung der einzelnen Produktinformations-Ferneinheiten mit elektrischer Energie, und vi) eine wirksam mit dem Mikrocomputer verbundene Eingabeeinrichtung, über die der DB-Speicher auf den neuesten Stand gesetzt werden kann; wobei das Produktinformationssystem auch ein Datenaktualisierungssystem einschließt, das wirksam mit jeder Eingabeeinheit der Vielzahl von selbständigen tragbaren Produktinformationsferneinheiten für die Aktualisierung der selbständigen tragbaren Produktinformaticns-Ferneinheiten mit den aktualisierten Produktinformationen, die auf die einzelnen Barcodes bezogen sind, gekoppelt ist, so dass die selbständigen tragbaren Produktinformations-Ferneinheiten vom Datenaktualisierungssystem zum Gebrauch durch den jeweiligen Kunden gelöst und nach Gebrauch durch den Kunden wieder an das Datenaktualisierungssystem zurückgegeben werden können, um mit den aktualisierten Produktinformationen auf den neuesten Stand gesetzt zu werden, und die Ferneinheiten zeigen an, ob sie mit den aktualisierten Produktinformationen auf den neuesten Stand gesetzt wurden; und wobei das Froduktinformationssystem auch Mittel einschließt, mit denen das Datenaktualisierungssystem mit den aktualisierten Produktinformationen einschließlich der Produktpreisinformation versorgt werden kann, so dass die selbständigen tragbaren Produktinformations-Ferneinheiten mit den gleichen aktualisierten Produktpreisinformationen wie die Barcode-Scanner an den Kassen versorgt werden.

Nicht berücksichtigt wird bei diesen Geräten jedoch der Einsatz in unterschiedlichen Sprachräumen und die Verwendung unterschiedlicher Zeichensätze.

Aus der US 2007/0179851A1 ist ein System bekannt, das die Verkaufshistorie und die Produktausgabehistorie von Produkten verwaltet. Hierbei wird ein Abgleich zwischen der Produktausgabe und der Verkaufshistorie durchgeführt.

Aus der FR 2892885 ist eine Funkterminal bekannt, das Buchstaben empfängt und diese in Multimedia-Inhalte umwandelt, entsprechend der Konfiguration.

### Überblick über die Erfindung:

Die Aufgabe der vorliegenden Erfindung liegt in der einfachen Konfiguration von Zeichensätzen bei Produktinformationsleseendgeräten, die vorzugsweise im Kassenumfeld eingesetzt werden. Im Folgenden wird der Begriff Produktinformationsleseendgerät und Endgerät in identischer Weise genutzt. Es ist zu beachten, dass dieses Gerät häufig mobil ausgebildet ist, es sind jedoch auch stationäre Varianten denkbar, die an Verkaufsregalen angebracht sind.

Gelöst wird die Aufgabe durch ein Verfahren und eine Vorrichtung mit den Merkmalen der unabhängigen Ansprüche.

Im Detail handelt es sich um ein Verfahren zur Verwaltung von Zeichensätzen auf einem Endgerät, das über eine Netzwerkschnittstelle zu einem Serversystem verfügt. Das Endgerät ist mit einer Einlesevorrichtung für die Produktidentität versehen und mit einem Display. In der bevorzugten Ausführungsform handelt es sich um einen Preis-Anzeigegerät, dass im Einzelhandel verwendet werden kann, um Preise für ein Produkt auf der Basis von Barcodeinformationen zu erfahren. Dabei wird das Gerät, das einen Barcodescanner aufweist, an den Gegenstand gehalten und über ein Netzwerk wird von einem Serversystem der Preis abgefragt. Es versteht sich natürlich, dass neben einem optischen Scanner auch ein RFID-Scanner eingesetzt werden kann. Das Endgerät weist einen änderbaren Speicherbereich auf, in dem die Zeichensätze abgelegt sind, die auf einer Anzeigeeinheit des Endgerätes angezeigt werden. Dieser Speicherbereich ist vorzugsweise ein Flashspeicher, der eine ausreichende Speicherkapazität aufweist, um die notwendigen Zeichensätze darin abzulegen. Aus Kostengründen ist der Flashspeicher jedoch so ausgelegt, dass der nicht alle Zeichensätze aufnehmen kann. Das Serversystem ist zentral im Netzwerk angeordnet und ermöglicht es, die Endgeräte zu verwalten. Das Serversystem kann durch die Endgeräte angesprochen werden, indem auf den Endgeräten eine Adresse für das Serversystem hinterlegt wird. In einer Alternativen Ausführungsform scannt das Serversystem beziehungsweise das Endgerät das Netzwerk nach bestimmten Identifikatoren ab, um so festzustellen, ob sich neue Endgeräte im Netzwerk angemeldet haben oder um, falls das scannen durch das Endgerät selber erfolgt, festzustellen, ob sich ein Serversystem im Netzwerk befindet. In der bevorzugten Ausführung wird einzig die Adresse des Serversystems (z.B. eine IP- Adresse) im Endgerät hinterlegt, so dass das Endgerät sich beim Serversystem anmelden kann, nachdem es sich im Netzwerk registriert hat. Die Registrierung kann z.B. durch bekannte Mechanismen erfolgen, wie sie z.B. in einem IP-Netzwerk bekannt sind über DHCP. Nachdem sich nun das Endgerät an einem Server angemeldet hat, wird anhand dessen Anmeldung beziehungsweise einer anderen Art der Identifikation festgestellt, welche Arten von Zeichensätzen auf diesem Gerät zu installieren sind. Die Art der Zeichensätze wird in einer Konfigurationszusammenstellung für die Endgeräte verwaltet. Bei der Anmeldung des Endgerätes werden folgende Schritte durchgeführt:
- Anmelden des Endgerätes am Serversystem und Austausch einer Identität. Der Austausch der Identität kann einerseits dazu dienen, um festzustellen, ob es sich bei dem Server um einen zulässigen Server handelt (gegenseitiges erkennen anhand von Zertifikaten), und andererseits um festzustellen, welche Konfigurationszusammenstellung auszuwählen ist.
- Im nächsten Schritt erfolgt eine Übertragung von Informationen über aktuell gespeicherten Zeichensätze auf dem Speicherbereich des Endgerätes. Hierbei werden nicht die vollständigen Daten der Zeichensätze übertragen, sondern lediglich Identifikatoren, anhand derer eine eindeutige Identifikation der Zeichensätzen möglich ist. Die Identifikation sind vorzugsweise so aufgebaut, dass ebenfalls versionsnummern hinterlegt sind, so dass auch erkannt werden kann, ob die richtige Version des Zeichensatzes auf dem Endgerät abgelegt ist, um diese gegebenenfalls durch eine neuere Version zu ersetzen.
- Nach dem übertragen der Identifikatoren an das Serversystem, überprüft das Serversystem, ob die Informationen über die aktuell gespeicherten Zeichensatze mit der Konfigurationszusammenstellung der Zeichensätze übereinstimmt,
- Falls keine Übereinstimmung gegeben ist, so überträgt das Serversystem die fehlenden Zeichensätze an das Endgerät, das dann wiederum die Informationen über die Zeichensätze aktualisiert.

In einer bevorzugten Ausführungsform werden auch die Versionen der Zeichensätze verwaltet, so dass auch diese notfalls gesichert und upgedated werden können.

Bei der Übertragung der Daten vom Endgerät werden folgende Schritte durchgeführt.
- Übertragen vom Endgerät Header-Informationen über die geladenen Zeichensätze. Die Header-Informationen entsprechend der Identifikation der einzelnen Zeichensätze.
- Aufbau einer Tabelle aus den Header-Informationen, durch das Serversystem;
- aus der Konfigurationszusammenstellung wird durch das Serversystem eine weitere Tabelle aufgebaut, die die zu ladenden Zeichensätze enthält,
- Vergleichen der beiden Tabellen, und übertragen von Zeichensätzen, falls notwendig.

In der bevorzugten Ausführungsform werden folgende Regeln beim Übertragen der Zeichensätze berücksichtigt:
1: Sind alle zu ladenden Zeichensätze in der Menge der geladenen Zeichensätze enthalten und bzgl. ihrer Version identisch, muss nicht geladen werden;
2: Ist ein Zeichensatz zwar geladen, hat aber eine andere Version als der zu ladende, muss geladen werden.
3: Fehlt ein Zeichensatz, muss dieser geladen werden.

Wie bereits oben ausgeführt wurde, ist es aufgrund der Speichernutzung des Endgeräts oftmals für das Serversystem nicht erkennbar, welcher freie Speicher auf dem Endgerät belegt ist. In einer möglichen Ausführungsform kann die Differenz, die sich aus der realen Nutzung und der Kapazität des gesamten Speichersystems ergibt, an das Serversystem übermittelt werden, so dass dieses beurteilen kann, welcher Speicherplatz noch verfügbar ist. Ferner ist es denkbar, dass das Serversystem an das Endgerät Anweisungen überträgt, aus denen ersichtlich ist, welche Zeichensätze zu löschen sind. In der einfachsten Ausführungsform, werden alle Zeichensätze gelöscht und vollständig erneuert, wenn lediglich ein Zeichensatz fehlt oder nicht aktuell ist.

### Figurenbeschreibung:

Im Folgenden werden die Figuren kurz beschrieben, auf die sich die folgende detaillierte Beschreibung bezieht:
Figur 1 zeigt einen Aufbau einer Konfigurationsdatei,
Figur 2 zeigt eine Tabelle der Codepage und der Version
Figur 3 zeigt die einzelnen Schritte, die ein System gemäß der vorliegenden Erfindung zu durchlaufen hat,
4 zeigt ein Netzwerk eines Scanners mit einem Serversystem, das die Zeichensatzinformationen für die Endgeräte verwaltet.

### Detaillierte Beschreibung einer möglichen Ausführungsform:

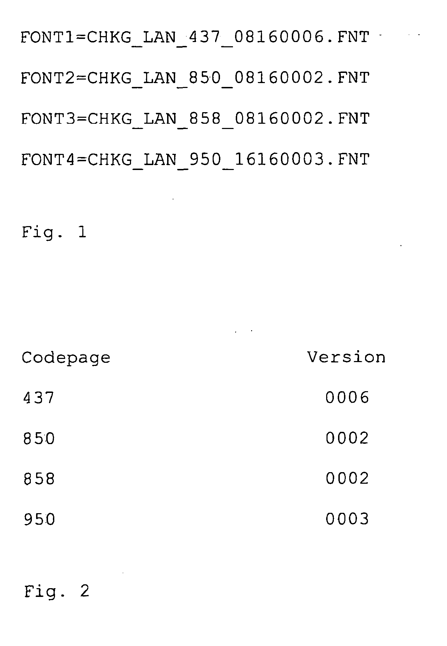

Bei der Herstellung von Endgeräten, insbesondere solchen, die Benutzerinformationen zu Produkten anzeigen, ist es sinnvoll, nur die gängigsten Zeichensätze ab Werk geladen auszuliefern und seltenere vor Ort je nach Land zu laden. Zur Angabe der benötigten Zeichensätze dient dabei eine Konfigurationsdatei, die wie in Fig. 1 dargestellt, aufgebaut ist. Sie enthält einmal den Namen des Fonts und rechts davon den Dateinamen. Diese Dateien beginnen mit einem Header, der u. a. die Nummer der Codepage, im obigen Beispiel für FONT4: 950 als auch die Version, z. B. für FONT4: 0003 enthält.

Im geladenen Zustand stehen diese Header auch im Flash-Baustein und sind über LAN vom Server aus auslesbar.

Ziel ist nun, dass der Techniker oder Administrator bei der Installation in der Konfigurationsdatei einmalig lediglich die benötigten Zeichensätze einträgt und sich danach darum nicht weiter kümmern muss, selbst dann nicht, wenn ein Gerät ausgetauscht werden muss. Denn im Allgemeinen weiß man nicht, welche Zeichensätze in einem Austauschgerät geladen sind.

### Es wird daher wie folgt vorgegangen:

Der für den entsprechenden Client zuständige Thread/Prozess auf dem Server liest die Konfigurationsdatei und baut eine Tabelle auf, die die zu ladenden Zeichensätze enthält, wie z.B. auf Fig. 2 ersichtlich.

Vom Endgerät - also dem Client - bekommt er die Header-Informationen über die geladenen Zeichensätze und baut daraus ebenfalls eine Tabelle auf.

### Dann wird verfahren gemäß

Regel 1: Sind alle zu ladenden Zeichensätze in der Menge der geladenen Zeichensätze enthalten und bzgl. ihrer Version identisch, muss nicht geladen werden.
Regel 2: Ist ein Zeichensatz zwar geladen, hat aber eine andere Version als der zu ladende, muss geladen werden.
Regel 3: Allgemein kann vom Server nicht erkannt werden, wie viel Platz noch im Flash-Baustein zur Verfügung steht. Daher wird immer dann, wenn auf Laden von Zeichensätzen entschieden wurde
   - ein Flash Erase /Löschen durchgeführt
   - und danach alle in der Konfigurationsdatei aufgeführten Zeichensätze geladen

Die Ziele sind also erfüllt. Nach Hardware-Tausch wird das Gerät automatisch geladen.

Wird ein Update einer Zeichensatzdatei in eine Filiale des Kunden geschickt, muss diese nur kopiert und in der Konfigurationsdatei ersetzt werden. Weitere Kenntnisse des Personals sind nicht erforderlich.

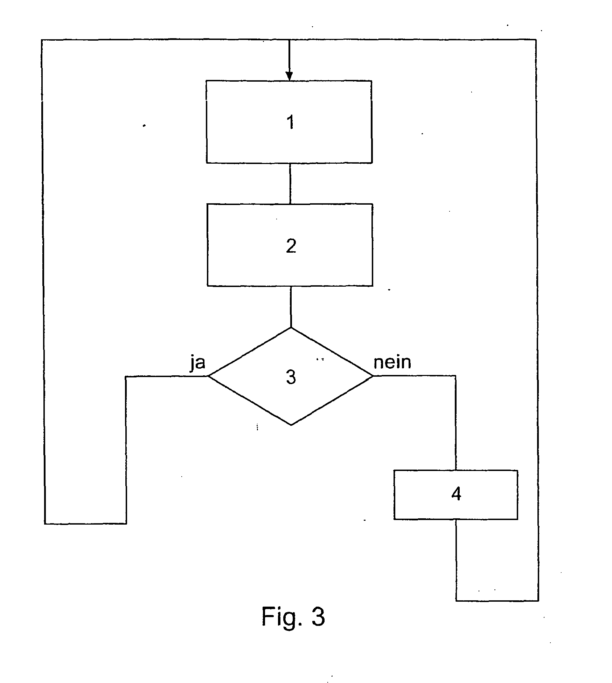

Die Figur 3 zeigt ein Ablaufdiagramm der vorliegenden Erfindung.

Im ersten Schritt (1) erfolgt eine Anmeldung des Endgerätes am Serversystem und Bestimmung einer Identität.

Im zweiten Schritt (2) erfolgt ein Übertragen von Informationen über aktuell gespeicherten Zeichensätze auf dem Speicherbereich des Endgerätes.

Im dritten Schritt (3) erfolgt eine Überprüfung durch das Serversystem, ob die Informationen über aktuell gespeicherte Zeichensätze mit der Konfigurationszusammenstellung der Zeichensätze übereinstimmt.

Falls keine Übereinstimmung gegeben ist, erfolgt ein Übertragen der fehlenden Zeichensätze an das Endgerät im vierten Schritt (4).

Falls eine Übereinstimmung gegeben ist, erfolgt keine Übertragung.

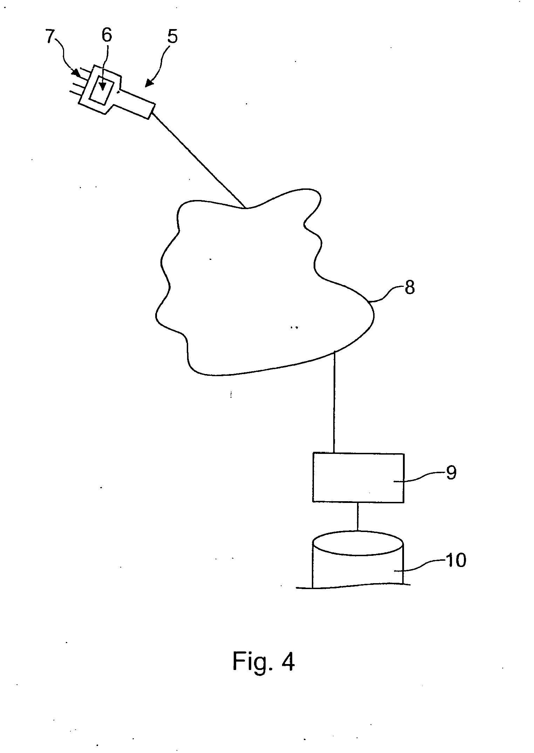

Die Figur 4 zeigt ein Netzwerk 8, an dem ein Serversystem 9 angeschlossen ist, der über einen Datenspeicher 10 verfügt. Im Datenspeicher 10 sind die Zeichensätze und die Konfigurationseinstellungen für die Endgeräte 5 abgelegt. Das Endgerät 5 umfasst eine Anzeigeeinheit 6 und einen Barcodescanner 7, bei dem die Barcodeinformationen eingegeben werden. Es ist weiterhin an das Netzwerk 8 über eine Netzwerkschnittstelle angeschlossen, wobei der Anschluss ebenfalls ein drahtloses Netzwerk sein kann.

## Patentansprüche

1. Verfahren zur Verwaltung von Zeichensätzen auf einem Produktinformationsabfrageendgerät, das eine Produktinformationsleseeinheit und eine Anzeigeeinheit aufweist, das über eine Netzwerkschnittstelle zu einem Serversystem verfügt, mit einem änderbaren Speicherbereich in dem die Zeichensätze abgelegt sind, die auf der Anzeigeeinheit anzeigbar sind, mit einem Serversystem, das Zeichensätze verwaltet und der eine Konfigurationszusammenstellung der Zeichensätze für die Endgeräte verwaltet, umfassend die Schritte:
- Anmelden (1) des Endgerätes am Serversystem und Bestimmung einer Identität;
- Übertragen (2) von Informationen über aktuell gespeicherte Zeichensätze auf dem Speicherbereich des Endgerätes:
- Überprüfen (3) durch das Serversystem, ob die Informationen über aktuell gespeicherte Zeichensätze mit der Konfigurationszusammenstellung der Zeichensätze übereinstimmt,
- Falls keine Übereinstimmung gegeben ist, Übertragen (4) der fehlenden Zeichensatze an das Endgerät.

2. Das Verfahren nach dem vorhergehenden Anspruch, wobei vor dem Übertragen der Zeichensätze ein Löschen von Zeichensätzen auf dem Endgerät erfolgt.

3. Das Verfahren nach dem vorhergehenden Anspruch, wobei ein Löschen von allen Zeichensätzen erfolgt, um dann die in der Konfigurationszusammenstellung aufgeführten Zeichensätze vollständig neu auf das Gerät zu laden.

4. Das Verfahren nach einem oder mehreren der vorhergehenden Ansprüche, wobei die Konfigurationszusammenstellung ebenfalls die Version des Zeichensatzes berücksichtigt.

5. Das Verfahren nach einem oder mehreren der vorhergehenden Ansprüche, wobei
- Übertragen vom Endgerät Header-Informationen über die geladenen Zeichensätze
- Aufbau einer Tabelle aus den Header-Informationen, durch das Serversystem;
- aus der Konfigurationszusammenstellung wird durch das Serversystem eine weitere Tabelle aufgebaut, die die zu ladenden Zeichensätze enthält,
- Vergleichen der beiden Tabellen, und übertragen von Zeichensätzen falls notwendig.

6. Das Verfahren nach dem vorhergehenden Anspruch, wobei folgende Regeln beim Übertragen der Zeichensätze berücksichtigt werden:
1: Sind alle zu ladenden Zeichensätze in der Menge der geladenen Zeichensätze enthalten und bzgl. ihrer Version identisch, muss nicht geladen werden;
2: Ist ein Zeichensatz zwar geladen, hat aber eine andere Version als der zu ladende, muss geladen werden.
3: Fehlt ein Zeichensatz, muss dieser geladen werden.

7. Das Verfahren nach dem vorhergehenden Anspruch, wobei falls vom Server nicht erkannt werden kann, wird der vollständige Speicher gelöscht und die gesamten Zeichensätze hochgeladen.

8. Das Verfahren nach einem oder mehreren der vorhergehenden Ansprüche, wobei das Endgerät eine Vorrichtung mit Scanner und Anzeigegerät ist, die mit einem Serversystem über einen Netzwerkanschluss in Verbindung steht, um Produktinformationen in einem Ladengeschäft, insbesondere den Preis anzuzeigen.

9. Produktinformationsabfrageerdgerät (5) umfassend
- eine Leseeinheit (7), die ausgebildet ist, um Produktinformationen einzulesen,
- eine Anzeigeeinheit (6), auf der unterschiedliche Zeichensätze anzeigbar sind,
- eine Netzwerkschnittstelle für einen Zugriff auf ein Serversystem,
- ein änderbaren Speicherbereich, in dem die Zeichensätze abgelegt sind,
- eine Bearbeitungseinheit, die so eingerichtet ist, dass eine Anmeldung über die Netzwerkschnittstelle an einem Serversystem (9)erfolgt, ein Austausch von Informationen über aktuell gespeicherte Zeichensätze auf dem Speicherbereich erfolgt, ein Empfang von Zeichensätzen vom Serversystem erfolgt, falls die Überprüfung durch das Serversystem ergibt, dass die Informationen über aktuell gespeicherte Zeichensätze mit der Konfigurationszusammenstellung der Zeichensätze nicht übereinstimmt.

10. Das Endgerät nach dem vorhergehenden Endgeräte-Anspruch, mit Mitteln, um vor dem Übertragen der Zeichensätzen ein Löschen von Zeichensätzen auf dem Endgerät durchzuführen.

11. Das Endgerät nach dem vorhergehenden Endgeräte-Anspruch, mit Mitteln, um alle Zeichensätze zu löschen, um dann die in der Konfigurationszusammenstellung aufgeführten Zeichensätze vollständig neu auf das Gerät zu laden.

12. Das Endgerät nach einem oder mehreren der vorhergehenden Endgerate-Ansprüche, wobei beim Updaten der Zeichensätze ebenfalls die Version des Zeichensatzes berücksichtigt wird.

13. Das Endgerät nach einem oder mehreren der vorhergehenden Endgeräte-Ansprüche, umfassend Mittel, um Header-Informationen vom Endgerät über die geladenen Zeichensätze zu übertragen, wobei das Serversystem eine Tabelle aus den Header-Informationen aufbaut, aus einer Konfigurationszusammenstellung wird durch das Serversystem eine weitere Tabelle aufgebaut, die die zu ladenden Zeichensätze enthält, es erfolgt ein Vergleichen der beiden Tabellen und übertragen von Zeichensätzen, falls notwendig, an das Endgerät.

14. Das Endgerät nach dem vorhergehenden Endgeräte-Anspruch, wobei Mittel vorhanden sind, um folgende Regeln beim Übertragen der Zeichensätze zu berücksichtigen:
1: Sind alle zu ladenden Zeichensätze in der Menge der geladenen Zeichensätze enthalten und bzgl. ihrer Version identisch, muss nicht geladen werden;
2: Ist ein Zeichensatz zwar geladen, hat aber eine andere Version als der zu ladende, muss geladen werden.
3: Fehlt ein Zeichensatz, muss dieser geladen werden.

15. Das Endgerät nach dem vorhergehenden Endgeräte-Anspruch, wobei Mittel vorhanden sind, die es dem Server erlauben, falls vom Server nicht erkannt werden kann, wie viel freier Speicherplatz gegeben ist, so wird der vollständige Speicher gelöscht und die gesamten Zeichensätze hochgeladen.

16. Das Endgerät nach einem oder mehreren der vorhergehenden Endgeräte-Ansprüche, wobei das Endgerät eine Vorrichtung mit Scanner und Anzeigegerät ist, die mit einem Serversystem über einen Netzwerkanschluss in Verbindung steht, um Produktinformationen in einem Ladengeschäft, insbesondere den Preis anzuzeigen.

## Claims

1. A method for managing character sets/fonts on a product information retrieval terminal device that has a product information reading unit and a display unit, comprising a network interface to a server system, with a modifiable storage area in which the character sets are stored that can be displayed on the display unit, with a server system managing the character sets and that manages a configuration setup of the character sets for the terminal devices, comprising the steps of:
- registering (1) of the terminal device at the server system and determining of an identity;
- transferring (2) of information about currently stored character sets on the storage area of the terminal device;
- monitoring (3) by the server system, whether the information of the character sets currently stored matches with the configuration setup of the character sets,
- if no compliance exists, transferring (4) of the missing character sets to the terminal device.

2. The method according to the preceding claim, wherein a deletion of the character sets is performed on the terminal device before the transfer of the character sets.

3. The method according to the preceding claim, whereas a deletion of all character sets is performed in order to re-load all the character sets listed in the configuration setup to the device.

4. The method according to one or more of the preceding claims, wherein the configuration setup also takes the version of the character set into account.

5. The method according to one or more of the preceding claims, comprising the steps:
- transferring from the terminal device header information of the loaded character sets,
- creating of a table from the header information by the server system;
- based on the configuration setup, the server system sets up another table that contains the character sets to be loaded,
- comparing of the two tables, and transfer of character sets if necessary.

6. The method according to the preceding claim, whereas the following regulations are being taken into account regarding the transfer of the characters:
1: If all character sets to be loaded are included in the sets of the loaded character sets and are equal in terms of their version, not load operation has to be performed;
2: If a character set is loaded, but however has a different version than the one which has to be loaded, it must be loaded.
3:If a character set is missing, it must be loaded.

7. The method according to the preceding claim, wherein, if the server cannot detect how much free space is given, the complete storage is deleted and the entire character sets are being uploaded.

8. The method according to one or more of the preceding claims, wherein the terminal device is equipped with a scanner and a display device that communicates with a server system via a network connection to show product information in a retail store, in particular the price.

9. Product information retrieval terminal device (5) comprising
- a reading unit (7), which is designed to read product information,
- a display unit (6), on which various character sets are viewable,
- a network interface for accessing a server system,
- a modifiable storage area in which the character sets are stored,
- a processing unit which is set up to enable a registration via the network interface to a server system (9), an exchange of information about currently stored character sets on the storage area, a reception of character sets from the server system is performed, if the review of the server system using the configuration setup of character sets shows that the information of the currently stored character sets is not matching.

10. The terminal according to the preceding terminal device claim, with means to carry out a deletion of the character sets on the terminal device before the transfer of the character sets.

11. The terminal according to the preceding terminal device claim, comprising means to delete all the character sets, to re-load all the character sets be listed in the configuration setup.

12. The terminal according to one or more of the preceding terminal device claims, wherein the updating of character set takes also the version of the character set into account.

13. The terminal according to one or more of the preceding terminal device claims, wherein means are provided to transfer from the terminal device header information of the loaded character sets, wherein the sever system creates a table from the header information, based on the configuration setup the server system sets up another table that contains the character sets to be loaded, comparing of the two tables, and transfer of character sets if necessary.

14. The terminal according to the preceding terminal device claim, wherein means are provided to take into account the following rules when transferring the character sets:
1: If all character sets to be loaded are included in the sets of the loaded character sets and are equal in terms of their version, not load operation has to be performed;
2: If a character set is loaded, but however has a different version than the one which has to be loaded, it must be loaded.
3: If a character set is missing, it must be loaded.

15. The terminal according to the preceding terminal device claim, wherein means are provided which allow the server, if the server cannot detect how much free space is given, to delete the complete storage and the entire character sets are being uploaded.

16. The terminal according to one or more of the preceding terminal device claims, wherein the terminal device is a unit with a scanner and display device that communicates with a server system via a network connection to connect to product information in a retail store, displaying in particular the price.

## Revendications

1. Procédé de gestion de polices de caractères sur un terminal d'interrogation d'informations de produit, qui comporte une unité de lecture d'informations de produit et une unité d'affichage, qui dispose d'une interface réseau à un système serveur, avec une zone de mémoire modifiable dans laquelle sont déposées les polices de caractères qui peuvent être affichées sur l'unité d'affichage, avec un système serveur qui gère des polices de caractères et qui gère une liste de configuration des polices de caractères pour les terminaux, comprenant les étapes consistant à :
- inscrire (1) le terminal sur le système serveur et déterminer une identité ;
- transmettre (2) des informations sur des polices de caractères actuellement stockées dans la zone de mémoire du terminal ;
- vérifier (3) par le système serveur si les informations sur les polices de caractères actuellement stockées coïncident avec la liste de configuration des polices de caractères,
- transmettre (4), en cas de non-coïncidence, les polices de caractères manquantes au terminal.

2. Procédé selon la revendication précédente, selon lequel une suppression de polices de caractères a lieu sur le terminal avant la transmission des polices de caractères.

3. Procédé selon la revendication précédente, selon lequel une suppression de toutes les polices de caractères a lieu afin de recharger ensuite intégralement sur le terminal les polices de caractères mentionnées dans la liste de configuration.

4. Procédé selon une ou plusieurs des revendications précédentes, selon lequel la liste de configuration tient également compte de la version de la police de caractères.

5. Procédé selon une ou plusieurs des revendications précédentes, comportant les étapes consistant à :
- transmettre des informations d'en-tête de terminal sur les polices de caractères chargées
- établir une table à partir des informations d'en-tête, par le biais du système serveur ;
- établir, par le système serveur, une autre table qui contient les polices de caractères à charger, à partir de la liste de configuration,
- comparer les deux tables et transmettre des polices de caractères, si nécessaire.

6. Procédé selon la revendication précédente, selon lequel les règles suivantes sont prises en compte lors de la transmission des polices de caractères :
1 : si toutes les polices de caractères à charger sont comprises dans la multitude de polices de caractères chargées et si leur version est identique, ne pas effectuer de chargement ;
2 : si une police de caractères est certes chargée, mais a une autre version que celle à charger, effectuer le chargement.
3 : s'il manque une police de caractères, charger celle-ci.

7. Procédé selon la revendication précédente, selon lequel, si le serveur ne peut rien reconnaître, la mémoire complète est effacée et toutes les polices de caractères sont téléchargées.

8. Procédé selon une ou plusieurs des revendications précédentes, selon lequel le terminal est un dispositif, pourvu d'un scanner et d'un appareil d'affichage, qui est en liaison avec un système serveur par le biais d'un raccordement de réseau afin d'afficher dans un magasin des informations de produit, en particulier le prix.

9. Terminal d'interrogation d'informations de produit (5) comportant
- une unité de lecture (7) qui est conçue pour lire des informations de produit,
- une unité d'affichage (6) sur laquelle peuvent être affichées différentes polices de caractères,
- une interface réseau permettant un accès à un système serveur,
- une zone de mémoire modifiable dans laquelle sont déposées les polices de caractères,
- une unité de traitement qui est agencée de sorte qu'une inscription auprès d'un système serveur (9) ait lieu par le biais de l'interface réseau, qu'un échange d'informations sur des polices de caractères actuellement stockées dans la zone de mémoire ait lieu, qu'une réception de polices de caractères par le système serveur ait lieu si la vérification par le système serveur a pour résultat que les informations sur les polices de caractères actuellement stockées ne coïncident pas avec la liste de configuration des polices de caractères.

10. Terminal selon la revendication de terminal précédente, doté de moyens pour exécuter une suppression des polices de caractères sur le terminal avant la transmission des polices de caractères.

11. Terminal selon la revendication de terminal précédente, doté de moyens pour supprimer toutes les polices de caractères afin de recharger ensuite intégralement sur le terminal les polices de caractères mentionnées dans la liste de configuration.

12. Terminal selon une ou plusieurs des revendications de terminal précédentes, avec lequel il est également tenu compte de la version des polices de caractères lors de la mise à jour des polices de caractères.

13. Terminal selon une ou plusieurs des revendications de terminal précédentes, comportant des moyens permettant de transmettre par le terminal des informations d'en-tête sur les polices de caractères, le système serveur établissant une table à partir des informations d'en-tête, le système serveur établissant à partir d'une liste de configuration une autre table qui contient les polices de caractères à charger, une comparaison des deux tables ayant lieu ainsi qu'une transmission des polices de caractères au terminal, si nécessaire.

14. Terminal selon la revendication de terminal précédente, comportant des moyens pour prendre en compte les règles suivantes lors de la transmission des polices de caractères :
1 : si toutes les polices de caractères à charger sont contenues dans la multitude de polices de caractères chargées et si leur version est identique, ne pas effectuer de chargement ;
2 : si une police de caractères est certes chargée, mais a une autre version que celle à charger, effectuer le chargement ;
3 : si une police de caractères manque, charger celle-ci.

15. Terminal selon la revendication de terminal précédente, qui comportent des moyens qui permettent au serveur, si le serveur ne peut pas reconnaître combien d'espace mémoire est libre, d'effacer la mémoire complète et de télécharger toutes les polices de caractères.

16. Terminal selon une ou plusieurs des revendications de terminal précédentes, le terminal étant un dispositif, doté d'un scanner et d'un appareil d'affichage, qui est liaison avec un système serveur par le biais d'un raccordement de réseau afin d'afficher des informations de produit, en particulier le prix, dans un magasin.
